(19) Europäisches Patentamt / European Patent Office / Office européen des brevets

(11) **EP 3 097 436 B1**

(12) **EUROPEAN PATENT SPECIFICATION**

(45) Date of publication and mention
of the grant of the patent:
**06.03.2024 Bulletin 2024/10**

(21) Application number: **15702362.3**

(22) Date of filing: **22.01.2015**

(51) International Patent Classification (IPC):
**G01V 1/13** *(2006.01)*

(52) Cooperative Patent Classification (CPC):
**G01V 1/13**

(86) International application number:
**PCT/US2015/012505**

(87) International publication number:
**WO 2015/112746 (30.07.2015 Gazette 2015/30)**

(54) **ANALYTICALLY GENERATED SHOOTING SCHEDULES FOR USE WITH PATTERNED AND SIMULTANEOUS SOURCE ACQUISITION**

ANALYTISCH ERZEUGTE AUSLÖSUNGSPLÄNE ZUR VERWENDUNG MIT STRUKTURIERTER UND SIMULTANER QUELLENERFASSUNG

PLANS DE TIR GÉNÉRÉS DE MANIÈRE ANALYTIQUE À UTILISER AVEC UNE ACQUISITION DE SOURCE SIMULTANÉE ET MODÉLISÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.01.2014 US 201461930211 P**

(43) Date of publication of application:
**30.11.2016 Bulletin 2016/48**

(73) Proprietor: **BP Corporation North America Inc.
Houston, TX 77079 (US)**

(72) Inventors:
• **ABMA, Raymond Lee
Naperville, Illinois 60563 (US)**
• **ROSS, Allan
Naperville, Illinois 60563 (US)**

(74) Representative: **Hamer, Christopher K. et al
Mathys & Squire
The Shard
32 London Bridge Street
London SE1 9SG (GB)**

(56) References cited:
**WO-A1-2012/078978     US-A1- 2013 155 810**

• **RAY ABMA ET AL: "Popcorn shooting: Sparse inversion and the distribution of airgun array energy over time", SEG TECHNICAL PROGRAM EXPANDED ABSTRACTS 2013, 19 August 2013 (2013-08-19), pages 31-35, XP055194149, DOI: 10.1190/segam2013-0592.1**

## Description

## Technical Field

This disclosure relates to the general subject of seismic surveillance and, in particular, to methods for acquiring seismic and other signals that are representative of the subsurface for purposes of seismic exploration and/or surveillance.

## Background

A seismic survey represents an attempt to image or map the subsurface of the earth by sending sound energy down into the ground and recording the "echoes" that return from the rock layers below. The source of the down-going sound energy might come, for example, from explosions or seismic vibrators on land, or air guns in marine environments. During a seismic survey, the energy source is placed at various locations near the surface of the earth above a geologic structure of interest. Each time the source is activated, it generates a seismic signal that travels downward through the earth. "Echoes" of that signal are then recorded at a great many locations on the surface. Multiple source / recording combinations are then combined to create a near continuous profile of the subsurface that can extend for many miles. In a two-dimensional (2-D) seismic survey, the recording locations are generally laid out along a single line, whereas in a three dimensional (3-D) survey the recording locations are distributed across the surface in a grid pattern. In simplest terms, a 2-D seismic line can be thought of as giving a cross sectional picture (vertical slice) of the earth layers as they exist directly beneath the recording locations. A 3-D survey produces a data "cube" or volume that is, at least conceptually, a 3-D picture of the subsurface that lies beneath the survey area. In reality, though, both 2-D and 3-D surveys interrogate some volume of earth lying beneath the area covered by the survey. Finally, a 4-D (or time-lapse) survey is one that is recorded over the same area at two or more different times. Obviously, if successive images of the subsurface are compared any changes that are observed (assuming differences in the source signature, receivers, recorders, ambient noise conditions, etc., are accounted for) will be attributable to changes in the subsurface.

A seismic survey is composed of a very large number of individual seismic recordings or traces. The digital samples in seismic data traces are usually acquired at 0.002 second (2 millisecond or "ms") intervals, although 4 millisecond and 1 millisecond sampling intervals are also common. Typical trace lengths are 5 - 16 seconds, which corresponds to 2500 - 8000 samples at a 2-millisecond interval. Conventionally each trace records one seismic source activation, so there is one trace for each live source location-receiver activation. In a typical 2-D survey, there will usually be several tens of thousands of traces, whereas in a 3-D survey the number of individual traces may run into the multiple millions of traces.

In seismic acquisition a marine source array, often an array of air guns, is composed of many single units that are towed behind one or more vessels that travels over the survey area. These units (e.g., air guns, water guns, sparkers, boomers, chip systems, water sirens, etc.) are typically hung in a line under a sausage buoy to allow them to be towed in a streamlined fashion. It is typical in deep water seismic surveying to use 6 to 15 guns under a single buoy.

Of recent interest is the use of so-called "Popcorn" survey techniques (as described more fully hereinafter) in marine seismic surveys. However, for all of the promise these sorts of surveys might hold, designing such surveys involves considerations that are different from those typically encountered in a conventional seismic survey. WO2012/078978 discloses a method of seismic acquisition comprising: (a) positioning a first seismic source array comprising a plurality of seismic sources over a seismic survey region, the seismic source array generating an output amplitude; (b) activating the first seismic source array according to one of a plurality of different firing patterns, the firing patterns comprising a plurality of different time intervals between the activation of each seismic source within the first seismic source array, wherein each firing pattern is optimized so as to minimize the output amplitude; and (c) recording a plurality of seismic signals reflected from one or more subterranean formations.

It should be noted and remembered that the description which follows, together with the accompanying drawings, should not be construed as limiting the claims to the examples (or embodiments) shown and described. It should be noted and understood that improvements and modifications of the embodiments described above may be made, within the scope of the appended claims.

## Summary

According to an aspect of the invention, there is provided a method of seismic exploration for hydrocarbons within a region of the subsurface (324) of the earth, wherein is provided a set (330) of seismic sources (340, 350), said set (330) of seismic sources (340, 350) comprising a plurality of subarrays, each of said subarrays having one or more seismic sources (340, 350) associated therewith, the method comprising: (a) selecting (410) an analytic firing pattern; (b) assigning (415) each of said plurality of subarrays a different firing time within said analytic firing pattern, thereby forming a firing schedule having a corresponding plurality of firing intervals between successive shots associated therewith; wherein said plurality of firing intervals between successive shots monotonically vary in length, and wherein said analytic firing pattern is based on a number of seismic sources (340, 350) in the set (330) of seismic sources (340, 350), and a size of the seismic sources (340, 350) in the set (330) of seismic sources; (c) positioning (420) said set of seismic sources (340, 350) at a first location proximate to the region of the subsurface (324) of the earth; (d) activating (420) each of said subarrays according to said firing schedule; (e) recording (425) seismic data as each of said plurality of subarrays is activated; (f) performing steps (d) and (e) at a plurality of different locations proximate to the region of the subsurface (324) of the earth, thereby acquiring a Popcorn seismic survey; (g) reconstructing (430) said recorded seismic data from said Popcorn seismic survey, thereby obtaining a plurality of seismic traces; and, (h) using (435) said plurality of seismic traces to image at least a portion of the subsurface (324) of the earth.

According to a disclosed instance, there is disclosed a method of marine seismic exploration that allows seismic sources to be used more efficiently than has been possible heretofore and that provides a means of controlling the properties (e.g., frequency, maximum amplitude, etc.) of Popcorn-type pattern of source activations by adjusting the timing and subarray composition of the source activations.

Also disclosed herein is a method of collecting seismic data using a predetermined pattern of source activations that is intended to control the properties of the resulting seismic signal. The method utilizes a seismic source array (or, more generally, any collection of controllable source) to create a series of spaced apart (in time) source activations, with the spacing and number of such activations being used to shape the resulting signal. By way of analogy only, such a firing pattern can be thought of as being analogous in some ways to a Vibroseis sweep. In one method of building such sweeps, the guns will be fired at an increasing rate as time goes by, which could be considered to be comparable to like an upsweep with Vibroseis. Other patterns may be generated by decreasing the firing rate as time goes by, or some combination of the foregoing. In an embodiment, the rate of the increase or decrease in the firing rate will change from pattern to pattern. One general goal in designing patterns could be to minimize the peak impulse while reducing the size of the correlation of any one pattern to that of any other pattern. Another goal might be to obtain firing patterns that do not have significant (e.g., distorting) notches in the resulting seismic signal.

Also disclosed herein but not according to the invention is a seismic system suitable for use with the invention which comprises a seismic source array comprising a plurality of seismic sources; and, a controller operatively coupled to the seismic source array, wherein the controller is programmed to activate the plurality of seismic sources according to one or more analytic firing patterns.

Other embodiments and variations are certainly possible within the scope of the instant disclosure and can readily be formulated by those of ordinary skill in the art based on the disclosure herein. The scope of the invention is defined by the appended claims.

The foregoing has outlined in broad terms the more important features of the teachings herein so that the detailed description that follows may be more clearly understood, and so that the contribution of the instant inventors to the art may be better appreciated. This disclosure and the claims that follow are not to be limited in its application to the details of the construction and to the arrangements of the components set forth in the following description or illustrated in the drawings. Rather, the teachings are capable of other embodiments and of being practiced and carried out in various other ways not specifically enumerated herein. Finally, it should be understood that the phraseology and terminology employed herein are for the purpose of description and should not be regarded as limiting, unless the specification specifically so limits it. The scope of the invention is defined by the appended claims.

## Brief Description of the Drawings

Other objects and advantages of embodiments will become apparent upon reading the following detailed description and upon reference to the drawings in which:

Figure **1** illustrates a general processing environment.
Figure **2** contains an operating logic suitable for use with an embodiment.
Figure **3** illustrates an example marine environment.
Figure **4** contains an operating logic suitable for use with an embodiment.
Figure **5** illustrates a firing pattern timing suitable for use with an embodiment.
Figure **6** illustrates a piecewise monotonic firing pattern suitable for use with an embodiment.

## DETAILED DESCRIPTION

While this disclosure is susceptible of embodiment in many different forms, there is shown in the drawings, and will herein be described hereinafter in detail, some specific embodiments. It should be understood, however, that the present disclosure is to be considered an exemplification of the principles thereof and is not intended to limit the disclosure to the specific embodiments or algorithms so described.

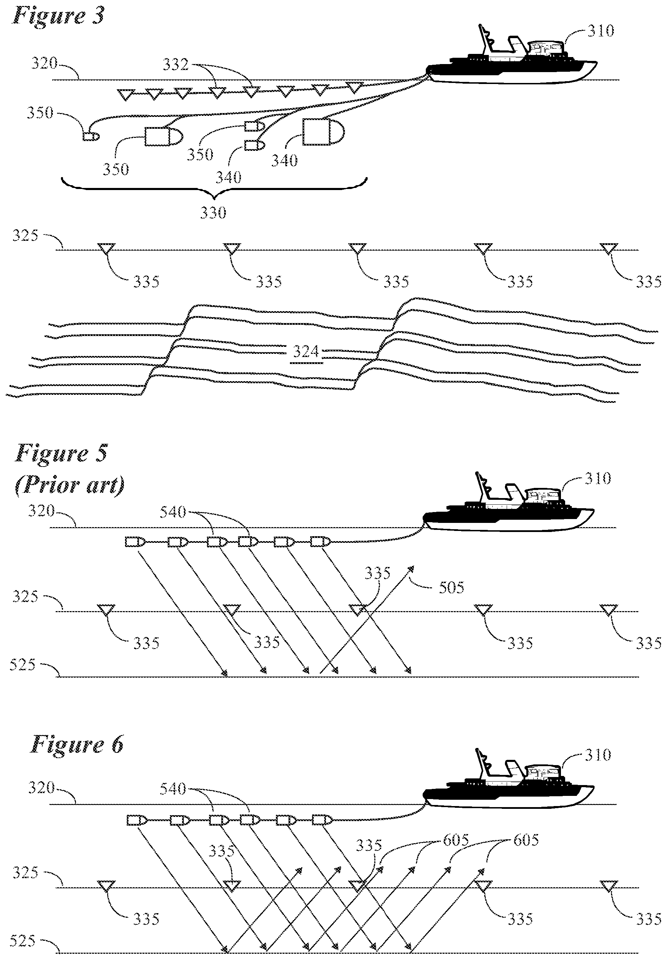

Unless indicated otherwise herein, the term "array" will be used to refer to the entire coordinated set of sources that are to be activated. These sources are activated sequentially (spaced apart in time). In the marine case, they could be towed by a single or multiple boats. A "subarray" is a collection of one or more individual sources within an array that are to be activated simultaneously. As an example, in Figure **3** if all of the sources **350** were activated simultaneously, that would constitute a subarray of the entire array **330.**

When the term "source" is used herein, it should be understood that, depending on the context, the reference is to a single source device, multiple source devices in a subarray, or both.

Note that, for purposes of the instant disclosure, the terms "firing pattern", "firing schedule", "shooting schedule", etc., will be used to refer to the activation timings of the sources in an array. Conventionally, the firing pattern would specify that all of the sources are to be activated simultaneously. However, according to an embodiment each of the sources might be separately activated. In still other instances, some sources will be activated individually and others activated in groups. In the invention, a firing pattern will comprise a list of the sources in an array and relative activation times for each, where a "source" might be a subarray of multiple physical signal generating devices.

For purposes of the instant disclosure, the terms "firing pattern duration", "shooting schedule duration", etc., refer to the length of time over which sources are activated pursuant to the associated firing pattern. As specific examples, firing pattern durations of between about 1 second and 10 seconds, and every interval in between those limits could potentially be used. Note that it is anticipated that in some embodiments multiple firing pattern durations might be used, with a change in duration taking place at every source activation point, every other source activation point, etc. In some embodiments, choosing firing pattern durations that are different for adjacent source activations would be desirable.

Additionally, the terms "firing intervals", "source intervals" and "source spacings" as used herein will refer to the time periods between successive source activations in a firing pattern. For purposes of illustration, the "first" source interval will refer to the length of time between the first and second source activations, the "second" source interval will refer to the time period between the second and third source activations, etc., where "source" should be broadly construed to also include a subarray of multiple source devices that are all activated simultaneously. A given source interval could be equal to zero, but a plurality of them must be nonzero.

Further, for purposes of the instant disclosure, an "analytic" firing pattern will be understood to be one that that has firing intervals that are monotonically increasing, monotonically decreasing, or piecewise monotonic as is described in greater detail below.

Simultaneous source acquisition in the marine context, for example, is a method of increasing the shot spatial sampling density of a seismic survey without slowing down the speed of the shooting boat. A typical simultaneous source shooting example might activate the source arrays at half the time interval of that used in a conventional survey. This causes the shot records to overlap each other in time which is generally avoided in seismic acquisition.

For purposes of the instant disclosure, "simultaneous source" acquisition will be understood to be a method of seismic data collection where the signals from two or more successive source activations from the same source or another source overlap / materially interfere with each other. The source(s) at issue might be towed by the same or a different vessel. "Self-simultaneous sourcing" should be understood to refer to instances where the same source (including an array of individual sources) is activated in rapid enough succession that late arriving reflections from a first activation of that source overlap in time and materially interfere with early arriving reflections from one or more subsequent activations of that same or nearby source. As a specific example, successive source activations that are separated by 5 seconds could qualify as simultaneous sources if the trace (recording) length is longer than 5 seconds, e.g., 10 seconds.

"Popcorn shooting" as that term is used herein is the practice of sequentially activating the sources in an array (or other collection of sources) over a period of time instead of the conventional practice of simultaneously firing of all the guns in the array. Broadly speaking there are three variations of this approach. The first is Popcorn shooting where sources overlap each other but a particular source does not overlap itself. A second variation of Popcorn shooting is self-simultaneous source Popcorn in which one or more sources overlap themselves. Finally, in still another variation of Popcorn shooting, the instant system and method may be implemented where one source vessel (or, more generally, more than one survey crew) shoots against another.

Overlapping shots that are sufficiently spaced apart in time within a seismic recording can then be separated during processing according to methods described below including shot separation by inversion. Some variations of the Popcorn acquisition system and method taught herein may involve self-simultaneous sourcing but that is not a requirement.

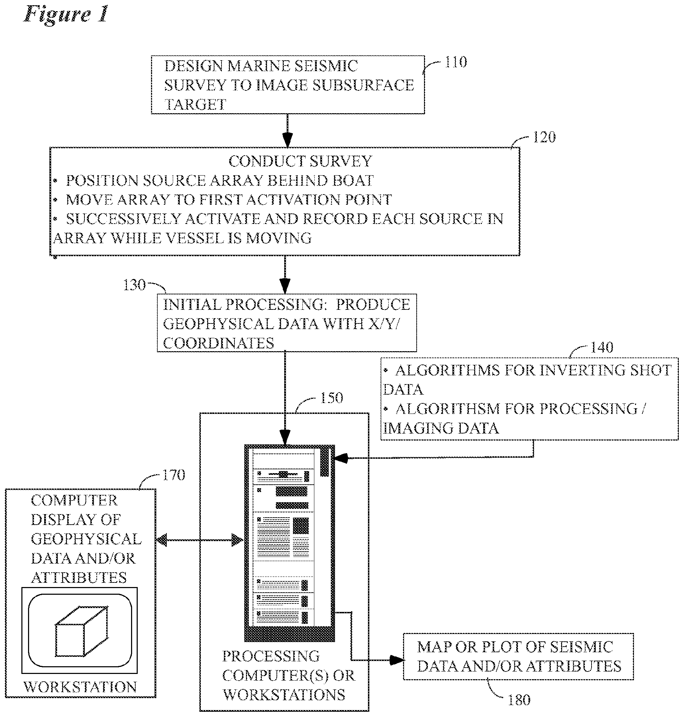

Turning first to Figure **1**, this figure contains a general overview of an embodiment and its associated environment. As is indicated, generally speaking a marine seismic survey will be designed **100** and evaluated according to the methods, and using the algorithms (block **140**), taught herein including, more specifically, analytic design of the shooting patterns. That means, as a specific example, an array (or some number of subarrays) will be selected together with two or more seismic sources that are to be towed behind the source boat. Those of ordinary skill in the art will understand how such is done and especially how such is done where the object is to image a particular subsurface target.

In the field, seismic data will be collected according to the instant disclosure (block **120**). As is taught herein, individual sources within the array (or the multiple sources that comprise a subarray) will be activated and recorded according to the specified schedule that determines when a particular firing pattern will be used and the timing of the use of such pattern pursuant to the survey design **110**, in many embodiments this will be while the vessel is in motion.

It is anticipated that according to an embodiment the vast majority of source activations will overlap (or be overlapped by) one or more other activations including, optionally, instances where a source might overlap itself (e.g., self-simultaneous sourcing). In some instances, the receivers will be sensors that are towed behind the source or another vessel. In other cases, the receivers might include ocean bottom receivers instead of (or in addition to) the towed geophone streamers.

Next, and as is conventionally done, some initial processing will be performed to associate each seismic recording with a surface or other location (block **130**). This might be done in the field or in the processing center. In either case, a computer system **150**, which might be a workstation, a server, a main frame, a parallel computer, a networked collection of computers or workstations, etc.

Next, the individual source or subarray activations will be identified and the processed to create a coded signal. According to an embodiment and is described more fully below, the source signatures from each of the sources will be used to reconstruct the recorded data into traces that are comparable to conventionally generated traces. In the event that self-simultaneous sourcing is employed, it may additionally be desirable to separate the overlapping shots according to methods well known to those of ordinary skill in the art (e.g., via sparse inversion). Algorithms that do deconvolution and separation (if needed) of seismic data will typically be made available to a computer that is to utilize them via access to some amount of local or remote hard disk or other storage (item **140**). Additional algorithms useful in the processing of seismic data will be similarly provided to the CPU **150** which might be any conventional or unconventional programmable computing device.

Following identification and, if necessary, separation of the different seismic source recordings, the data will be processed as is generally discussed below depending on the survey design. In some instances the source activations might be combined in different ways to produce the same effect as a simultaneous excitation of the entire array or source set, combined in such a way as to focus the array to emphasize reflectivity from a particular target (e.g., via beam steering), or, combined to minimize the effect of the ghost notch, etc. The resulting data records will be seismic records that are comparable to those conventionally recorded by other methods.

The resulting seismic data might be used in any number of ways. Conventionally, the data will be processed and viewed on a computer display such as that of a workstation **170**. Output from the seismic processing may be used to create maps or plots of seismic data and/or seismic attributes **180** according to methods well known to those of ordinary skill in the art.

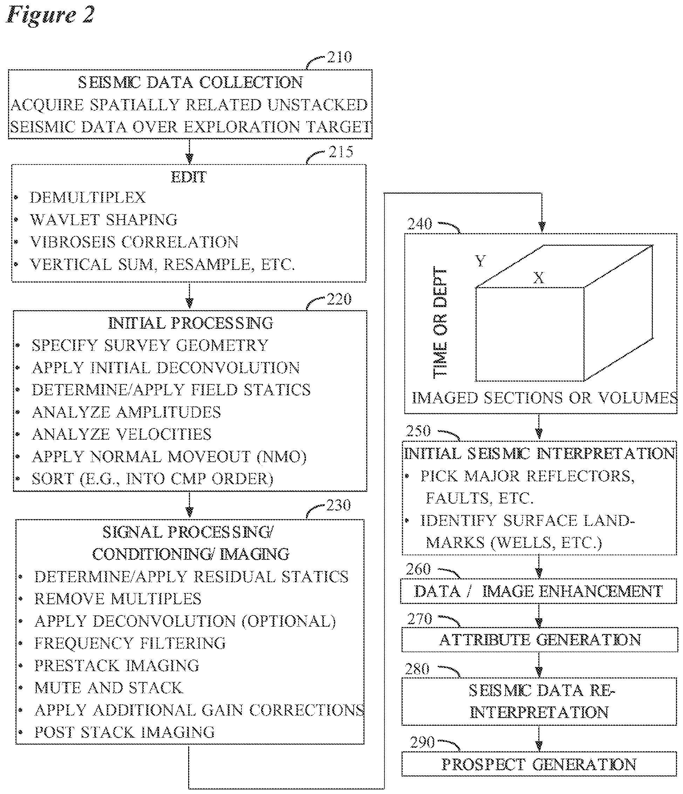

Figure **2** contains additional details of a typical seismic processing sequence that might begin with data collection according to the design considerations of the instant disclosure **210**, editing **215**, some sort of initial processing **220**, conditioning of the signal and imaging **230**, production of imaged sections or volumes **240**, initial interpretation of the seismic data **250**, further image enhancement consistent with the exploration objectives **260**, generation of attributes from the processed seismic data **270**, reinterpretation of the seismic data as needed **280**, and ultimately generation of a drilling prospect **290**. In an embodiment, one aspect of the Popcorn method could be implemented as part of block **215**. Note that if an embodiment of the methods taught herein were implemented using land or marine vibrators, the vibrator correlation might be handled as part of this block and, in some cases, as part of the Popcorn reconstruction.

Figure **3** contains an illustration of an embodiment as it might be practiced in a marine environment. In an embodiment, one or more seismic vessels **310** will tow some number of receiver sensors **332** in a body of water **320**. Additionally, at least one of the vessels **310** will tow a set **330** of seismic sources **340** and **350**. Note that the sources **340** / **350** in the set **330** need not be the same size / capacity / frequency range and could possibly be towed at different depths. On the other hand, the sources **340** / **350** in the set could all be of the same size / capacity / frequency range and the fact that different sizes of representative icons were used in this figure should not be construed to limit the instant disclosure to only those arrays with sources of different sizes. In some embodiments, additional receivers **335** (e.g., ocean bottom receivers, receivers in well bores for use in a vertical seismic profile, etc.) will be situated on the ocean floor **325**. A principal object of a seismic survey, of course, is to obtain an image of the subsurface configuration **324**.

Continuing with the example of Figure **3**, in this figure each of the individual sources **340** and **350** in the set might get its own randomly generated firing schedule, independent of the others. As another example, the sources of Figure **3** might be grouped into two subarrays and only two firing schedules would then need to be developed: one for sources **340** and another for sources **350**. Those of ordinary skill in the art will readily be able to devise different combinations of sources, subarrays, and firing schedules that would be consistent with the instant teachings.

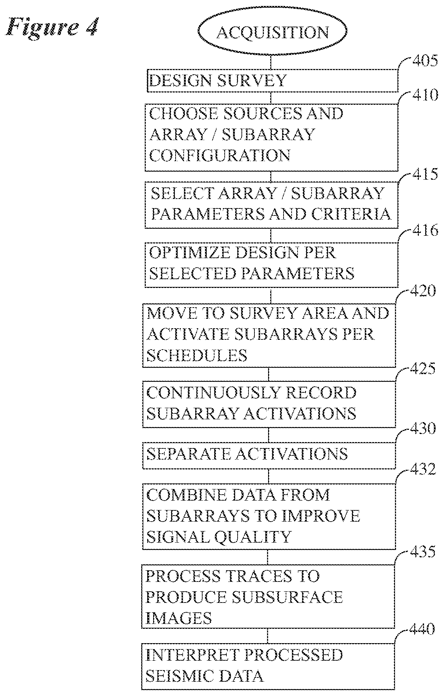

In the invention, Popcorn patterns (Figure **4**) are designed via an "analytic" method. In the invention and as is generally set out in Figure **4**, the design process will start with determination of the number and sizes of the seismic sources that are available. The subsurface target parameters (e.g., depth, dip, thickness, velocities, etc.), and other sorts of information typically considered in planning a seismic survey (block **405**) typically may also be determined. Methods of determining generally good parameter choices for a conventional seismic survey are well known to those of ordinary skill in the art.

For purposes of the instant disclosure, of particular importance is the selection of the number and sizes of the seismic sources (block **410**). As will be discussed in greater detail below, such information about the sources will be used, in some embodiments, in connection with a program that generates synthetic seismic data in order to select a good or a best firing pattern or patterns for use in connection with the survey. Additionally, it is certainly possible that an initial choice of the number and sizes of seismic sources could be modified after such synthetics (or field tests, etc.) have been generated and studied. Thus, the selection of the survey parameters should be viewed as potentially being an iterative process with some parameter choices interacting with or determining other choices.

Next, in an embodiment a plurality of candidate firing schedules will be generated (block **415**). In some embodiments, a goal would be to control the shape, frequency distribution, and/or other properties of the seismic waveform by adjusting the timing between the firing of subarrays in a firing pattern, i.e., via the analytic Popcorn approach taught herein. In some embodiments, the patterns will be chosen or not (block **416**) according to one or more of the following guidelines:

- The firing patterns will be chosen so that the time intervals between successive subarray activations decreases monotonically. Thus, this firing pattern can be thought of generally as "speeding up" the source activations in a manner that is reminiscent of a Vibroseis upsweep. In other cases, the firing patterns will be designed to have source intervals that increase monotonically (i.e., the source activations are "slowed down"). In still other cases, some combination might be used (e.g., an increase, followed by a decrease).

- When choosing between firing patterns that are otherwise acceptable, the one that produces the smallest maximum source signal amplitude (i.e., the pattern that results in the smallest overall source amplitude) could be chosen.

- Firing patterns could be chosen so that they are not too similar to each other and this would be especially useful with respect to firing patterns that are used at shot points that are proximate to each other.

- Examination of the frequency spectra of seismic data collected according to each pattern can be used to select some patterns for inclusion or eliminate some patterns from consideration. In some cases, frequency spectra that have been calculated from synthetically or otherwise obtained seismic data collected by activation of a firing pattern could be reviewed for the presence or absence of frequency notches, peaks, etc.

In addition to the foregoing, other criteria that might be used include gun refill time requirements, air supply limits, reuse of guns within a Popcorn pattern, the availability of spare guns, the use of the air guns either to disrupt the water surface to attenuate the ghost notch or to suppress the bubble oscillations.

Further with respect to the foregoing, in some embodiments the sweeps will be linear, so that once the temporal length of the pattern and the smallest time interval between successive shots in the pattern is chosen, and, in some instances, the rate of increase / decrease of the shot spacing, the pattern will be specified. Clearly, other combinations of parameters are possible, e.g., the number of sources, the time interval between the first and second (or last and next-to-last) shots, the rate of increase / decrease, etc. Those of ordinary skill in the art will readily be able to determine the combination of parameters that would uniquely specify a particular pattern. Further parameters such as these may be varied (e.g., systematically, algorithmically, randomly, etc.) to find a pattern that is acceptable in a particular survey location.

The rate of increase or decrease of the firing times can be roughly thought of to correspond to shrinking or stretching the chirp signal in a Vibroseis sweep. The length of the pattern will depend on the number of guns, the firing rate, and the change in the firing rate. In some embodiments there may be 45 to 60 guns in the array. However, the resulting patterns should not be so short that the maximum impulse (i.e., the maximum amplitude of the signal that is produced by a given pattern) becomes undesirably large or so long that the position of the shot has a spatial size that is too large. In some embodiments, a number of patterns might be generated either randomly and systematically and evaluated as to maximum amplitude, the presence of spectral notches within the seismic band, etc.

In one method of building sweeps the sources will be activated at an increasing rate as time goes by. Other patterns may be generated by decreasing the firing rate as time goes by. The rate of the increase or decrease in the firing rate could change from pattern to pattern. In an embodiment, one general goal would to minimize the peak impulse while reducing the size of the correlation of any one pattern to that of any other pattern.

One method of determining whether a particular pattern will be acceptable would be to generate synthetic seismograms using the parameters of the selected sources (e.g., typical source signatures, frequency content, etc. or each source) in combination with a candidate pattern. The frequency content or other characteristic of the resulting seismic signal (composite source signature) could then be analyzed to see if the resulting frequency content would be acceptable. For example, a composite source signature having frequency spectrum with relatively deep notches within the seismic bandwidth might be unacceptable depending on the anticipated subsurface configuration. Candidate source patterns could also be tested against subsurface geologic models to produce synthetic seismic traces and an associated synthetic seismic survey that provides an estimate of the actual subsurface response that would be obtained in the field if such a pattern were to be used. Of course, to the extent that important reflectors are imaged (or not) is another criterion that could be used to select firing patterns.

A complication potentially arises if the time separations between successive source activations are chosen to be nonlinearly spaced apart. As an example and by way of analogy, non-linear Vibroseis sweeps are designed to put more energy into the ground at some frequencies, typically the low ones. In present case, the frequency content is set by the individual airguns, and the shape of the pattern should be chosen such that it doesn't create any significant notches in the spectrum. Even this a strict requirement, since the notch could potentially filled in from nearby shots. However, the most accurate results will likely be obtained if the signal is as notch-free as possible.

In the case of a nonlinear source activation pattern, it might be desirable to avoid having two guns going off so close together in time that they create unacceptably high source amplitude. Depending on the particular pattern, a non-linear sweep might create some issues with respect to lowering the amplitude within certain frequency ranges, but this should not be a problem except in extreme cases. That being said, this same problem could arise even in the linear case. For example, consider a one second pattern where the first and second guns are separated by 3/4 second, and the rest need to fit in the remaining 1/4 second. Most of the remaining guns would be firing on top of each other which would typically be considered a situation to be avoided.

An additional concern is that it would generally be best if not too many of the sources have an identical time separation or time separations that are approximately the same. A likely result of multiple sources that fire sequentially at equally spaced intervals would be the introduction of a frequency notch that corresponds to the time delay. A few identical intervals could certainly be tolerated but such should generally be avoided unless there is a specific reason to do otherwise. Generally speaking, a good firing sequence would be one that doesn't create notches or attenuate a range of frequencies. Assuming that the duration of the pattern is long enough, most linear sweeps would not have this problem provided that they are arranged so as to not cluster the guns within too small a time interval.

With respect to the firing time duration, one important variable is the total number of source activations. As described above, in most embodiments it would be beneficial to not have the sources grouped too closely together. As such, and as one specific example, if 60 sources are to be activated separately according to a monotonically decreasing linear pattern, the firing time duration might extend for 5 to 10 seconds, with longer or shorter durations being chosen in some circumstances. Given some combination of the firing time duration, the number source activations, and/or the function that describes the changing time separations between source activations, one of ordinary skill in the art will readily be able to construct an associated firing pattern.

One example of a less than optimal shooting pattern would be to shoot an array at one depth at a given shot point, then shoot another array at another depth at the next shot point. In this case each shot point would have a significant spectral notch corresponding to the gun depth. Popcorn reconstruction would be possible with this configuration, but the reconstruction would not be as accurate as would be otherwise possible. A better set of patterns would be to have a combination of guns at both depths at every shot point. The combined set of guns would fill in the notches due to the depths of both sets of guns. Continuing this method, guns shot at every shot point with many different depths would tend to reduce the effect of the spectral notches that are due to the gun depths. This would make Popcorn reconstruction relatively easy and stable which would contribute to the accuracy of the results.

Figure **5** contains a schematic illustration of how time intervals might be chosen in one embodiment. In this figure, the firing times for an array of seismic sources are represented as arrows **505**, with a first source in the array that is activated, followed by a second source, etc. As can be seen, in this example the firing delay or source interval ($\Delta t_i$) between successive activations decreases throughout the firing pattern. For example, $\Delta t_1$ (the time interval between the first source and second source activations) is greater than $\Delta t_2$ which is greater than $\Delta t_3$, etc. More generally, this means that:

$$\Delta t_i \leq \Delta t_j, \text{ for } i > j.$$

In this particular example, each source separation is shorter than the one that preceded it which implies an increasing rate of source activation. For purposes of the instant disclosure, firing intervals that satisfy the above inequality will be referred to as monotonically decreasing. Similarly, a monotonically increasing firing interval will be used to describe instances where the firing pattern source activation intervals regularly increase. It should be understood, though, that there must be at least two strict inequalities among the source intervals (e.g., $\Delta t_k < \Delta t_l$ for some $k$ and $l$) in order to qualify as a monotonically increasing / decreasing firing pattern.

Additionally it should be noted that in some embodiments the firing intervals might be piecewise monotonically increasing, decreasing, or both. As an example, a simple piecewise monotonic collection of firing intervals might be defined as

$$\Delta t_i \leq \Delta t_j, \text{ for } i > j, i,j \geq K$$

$$\Delta t_i \geq \Delta t_j, \text{ for } i > j, i,j \leq K.$$

Turning to Figure **6**, this figure illustrates a simple two region piecewise monotonic firing pattern. In this particular example, the source separations **605** for certain shots are all decreasing monotonically, whereas source separations **605** for other shots are increasing monotonically. Clearly, there could be more than two regions and this is especially so where there are a large number of sources (e.g., 60 or so).

There might be other sorts of timing distributions, e.g., where each source separation is longer than the one before it (i.e., the rate of source activations is slowing down), one where each firing time interval is less than or equal to (or greater than or equal to) the one before it, etc. In other embodiments, the rate by which the source separations decrease (or increase) might be changed over time.

Additionally, other factors that might be considered in designing firing patterns would include whether to activate the sources in a subarray simultaneously or sequentially (e.g., should two sources in the array be simultaneously activated or separately activated). However, in most cases the firing pattern interval times will be monotonically increasing or decreasing, to include the case where some, but not all, of the interval times might be the same.

Returning now to Figure **4**, in some embodiments and as will be explained in greater detail below multiple analytic firing patterns will be created (boxes **415**, **416**, **417**, and **418** in Figure **4**), evaluated and then, if found suitable, used during acquisition. That is, in some variations multiple firing patterns will be created and then used alternately - either deterministically or randomly - during the survey. In some embodiments the firing schedules will be changed every shot point so that the same firing schedule will not be used at two adjacent shot points. In some cases the firing patterns will be generated in the field in real-time or near real-time. In other instances, they will be generated in advance of conducting the survey during the design process.

After a firing pattern has been generated (box **415**) according to the embodiment of Figure **4,** it will be examined to determine whether or not it would be a good candidate for use in the field (box **416**). In an embodiment, some or all of the guidelines presented above will be used to screen candidate firing patterns. For example, the patterns generated by this method could be examined to see if there are significant notches or peaks in the spectrum of the pattern, as may happen if the pulses are unsuitably spaced. According to this embodiment, if a firing pattern is acceptable (the "YES" branch of decision item **416**) it will be stored for subsequent use (box **417**). However, if the firing pattern is not one that is deemed to be suitable, (the "NO" branch of decision item **416**) another one can be generated.

Once a sufficient number of shooting schedules have been accumulated, (the "YES' branch of decision item **418**) the schedules are ready to be utilized in the field (block **420**). In some embodiments the sources will be continuously recorded while the shooting schedules are utilized (box **425**) but in other instances a conventional recording approach will be utilized (i.e., start recording, activated sources at current shot point, end recording). Particularly careful design of the patterns may be needed for continuous Popcorn shooting. Continuous Popcorn allows the shot spacing to be a processing parameter, but continuous Popcorn also assumes a significant element of simultaneous shooting. In an embodiment, to ensure that the shots defined by the processing for a given shot spacing can be well separated, the Popcorn patterns used should be designed to work well with several possible shot spacings. While the patterns for adjacent shots will likely not be orthogonal, it would be better if the patterns avoided strong correlations when used with the various shot spacings that could possibly be utilized during the processing of the data. Those of ordinary skill in the art will readily be able to determine whether continuous, conventional, or some other recording approach would best be utilized in a particular case.

After acquisition according to the methods described herein, in some embodiments the data will be processed via sparse inversion (block **430**) as is described in further detail below and then further processed (e.g., using some or all of the processes in Figure **2**) to produce subsurface images (block **435**) for use in seismic exploration (block **440**).

In an embodiment one goal will be to shape Popcorn-acquired seismic data to match or otherwise resemble the data that would have been created using a conventional airgun or airgun array with a known signature. Of course, given a known or estimated signature, the resulting seismic data can be further shaped to approximate a spike-like source according to methods well known to those or ordinary skill in the art (e.g., via deconvolution).

According to still other embodiments, simulated annealing, genetic algorithms, hybrid genetic algorithms, neural networks, expert systems and other artificial intelligence methods, and minimum entropy methods might be used to calculate suitable survey patterns. In brief, the problem of designing patterns is basically an optimization problem with a set of constraints and a set of goals. There will be some trade-offs between the different goals and the different constraints depending on the importance of the constraints and goals for any particular seismic survey.

Numerical experiments / simulations have shown that the instant approach can yield very good reconstructions, much better than may be needed in a practical sense.

After acquisition and continuing with block **430**, each seismic data record will contain multiple source activations that will need to be processed to cause them to add constructively. That is, each trace can be thought of as being generated by a complex multi-spike source that is activated over some period of time. One method of shaping the resulting composite waveform to approximate a single spike is through an operation such as deconvolution. For purposes of the instant disclosure, the term "reconstruction" should be understood to mean the processing step(s) necessary to convert traces collected during a Popcorn survey into more conventional seismic traces.

In one embodiment the recorded seismic data "*d*" can be related to the desired unmixed / reconstructed source activations "m" through the following matrix equation:

$$d = Am,$$

where, "*A*" is a set, a matrix, or a linear operator of Popcorn signatures that are to be applied the signal, where a "Popcorn signature" is the composite signature that is formed when all of the sources in a set are activated according to the specified schedule. In some embodiments, a coherency condition ("C") might also be applied (e.g., the shot at one surface location will tend to resemble the shots at proximate locations, etc.):

$$d = ACm.$$

Since the matrix *A* is likely to be underdetermined, in some embodiments an iterative approach could be used to obtain *d*. One method of solving for *d* would be as follows;

$$\text{Set m} = 0;$$

$$\text{Set } d_{\text{estimated}} = 0$$

Calculation loop:

$$\Delta d = d - d_{\text{estimated}}$$

$$\Delta m = A^{-1} \Delta d$$

$$m = m + \Delta m,$$

apply coherency filter to m

$$d_{\text{estimated}} = A \, m$$

Recalculate $\Delta d$, etc. until the answer is satisfactory. As is indicated above, in an embodiment an FK transform, FX deconvolution, etc., might be used as a coherency filter to attenuate incoherent energy. In some applications, the transform might be applied to a common offset or common receiver gather by taking the FK transform and discarding (e.g., setting to zero) all values below a particular threshold value. Those of ordinary skill in the art will understand that the particular parameter values that control the coherency filter might need to be selected based on experience and/or on a trial and error basis but such is well within the skill of one who practices in this field. The selection of the coherency processing parameters might depend on quality of the recorded seismic data, the Popcorn patterns utilized, the array size, sources used, etc.

Continuous Popcorn allows the shot spacing to be a processing parameter, but continuous Popcorn may also involve a significant element of simultaneous and/or self-simultaneous sourcing and subsequent separation of the overlapping source activations. That being said, in many embodiments self-simultaneous sourcing will not be desired and, in such case, the data will not need to be separated and reconstruction can proceed as is discussed *supra*.

In the foregoing, much of the discussion has been discussed in terms of marine seismic surveys, but that was done for purposes of illustration only and not out of an intent to limit the application of the instant system and method to only those sorts of surveys. Those of ordinary skill in the art will understand how the embodiments presented *supra* could readily be applied to, by way of example, 2D, 3D, 4D, etc., marine surveys, land surveys, down hole

It should also be noted and remembered that the embodiments presented herein are only given as examples and the teachings should not be limited to these examples unless specifically so indicated The scope of the invention is defined by the appended claims.

Further, although the text might have described the seismic sources as "guns", "airguns", etc., that was done only for purpose of illustration and any marine source including, without limitation, air guns, water guns, sparkers, boomers, chirp systems, water sirens, marine vibrators, etc., might potentially be used. Additionally, as noted previously the instant disclosure could be applied on land as well. Further, instances where the term "shot" was used herein should not be construed to limit the instant disclosure to only operating with impulsive sources. Thus, when the term "seismic survey" is used herein that term should be understood to apply to a survey on water, land, or any combination of same.

Still further, where reference is made herein to a method comprising two or more defined steps, the defined steps can be carried out in any order or simultaneously (except where context excludes that possibility), and the method can also include one or more other steps which are carried out before any of the defined steps, between two of the defined steps, or after all of the defined steps (except where context excludes that possibility).

Additional details related to the simultaneous source and self-simultaneous source methods may be found in one or more of the following references: (1) U.S. Patent Application Serial No. 12/542,433 (now issued USPN 8,295,124 B2, entitled "Method for Separating Independent Simultaneous Sources"); (2) U.S. Patent Application Serial No. 12/851,590, (now issued USPN 8,559,270 B2,); and (3) U.S. Patent Application Serial No. 13/315,925 entitled "Distance-And Frequency-Separated Swept-Frequency Seismic Sources".

Further, when in this document a range is given as "(a first number) to (a second number)" or "(a first number) - (a second number)", this means a range whose lower limit is the first number and whose upper limit is the second number. For example, 25 to 100 should be interpreted to mean a range whose lower limit is 25 and whose upper limit is 100. Additionally, it should be noted that where a range is given, every possible subrange or interval within that range is also specifically intended unless the context indicates to the contrary. For example, if the specification indicates a range of 25 to 100 such range is also intended to include subranges such as 26-100, 27-100, etc., 25-99, 25-98, etc., as well as any other possible combination of lower and upper values within the stated range, e.g., 33-47, 60-97, 41-45, 28-96, etc. Note that integer range values have been used in this paragraph for purposes of illustration only and decimal and fractional values (e.g., 46.7 - 91.3) should also be understood to be intended as possible subrange endpoints unless specifically excluded.

Further, it should be noted that terms of approximation (e.g., "about", "substantially", "approximately", etc.) are to be interpreted according to their ordinary and customary meanings as used in the associated art unless indicated otherwise herein. Absent a specific definition within this disclosure, and absent ordinary and customary usage in the associated art, such terms should be interpreted to be plus or minus 10% of the base value.

Additionally, while this disclosure is susceptible of embodiment in many different forms, there is shown in the drawings, and will herein be described hereinafter in detail, some specific embodiments. It should be understood, however, that the present disclosure is to be considered an exemplification of the principles of the system and method taught herein and is not intended to limit it to the specific embodiments or algorithms so described.

While the disclosed system and method has been described and illustrated herein by reference to certain embodiments in relation to the drawings attached hereto, various changes and further modifications, apart from those shown or suggested herein, may be made therein by those skilled in the art, without departing from the scope of which is to be determined by the following claims.

## Claims

1. A method of seismic exploration for hydrocarbons within a region of the subsurface (324) of the earth, wherein is provided a set (330) of seismic sources (340, 350), said set (330) of seismic sources (340, 350) comprising a plurality of subarrays, each of said subarrays having one or more seismic sources (340, 350) associated therewith, the method comprising:

    (a) selecting (410) a firing pattern;

    (b) assigning (415) each of said plurality of subarrays a different firing time within said firing pattern, thereby forming a firing schedule having a corresponding plurality of firing intervals between successive shots associated therewith;
    (c) positioning (420) said set of seismic sources (340, 350) at a first location proximate to the region of the subsurface (324) of the earth;
    (d) activating (420) each of said subarrays according to said firing schedule;
    (e) recording (425) seismic data as each of said plurality of subarrays is activated;
    (f) performing steps (d) and (e) at a plurality of different locations proximate to the region of the subsurface (324) of the earth, thereby acquiring a Popcorn seismic survey;
    (g) reconstructing (430) said recorded seismic data from said Popcorn seismic survey, thereby obtaining a plurality of seismic traces; and,
    (h) using (435) said plurality of seismic traces to image at least a portion of the subsurface (324) of the earth;
    the method being **characterised in that**
    the firing pattern is analytic, wherein the plurality of firing intervals between successive sources monotonically vary in length; and said analytic firing pattern is based on a number of seismic sources in the set of seismic sources, and a size of the seismic sources in the set of seismic sources.

2. The method of Claim 1, wherein at least one of said subarrays comprises a single one of said set (330) of seismic sources (340, 350).

3. The method of Claim 1, wherein at least steps (c) through (g) are performed a plurality of times at a plurality of different locations proximate to the region of the subsurface (324) of the earth, thereby acquiring a seismic survey proximate to the region of the subsurface (324) of the earth.

4. The method of Claim 1, wherein at least steps (a) through (g) are performed a plurality of times at a plurality of different locations proximate to the region of the subsurface of the earth, thereby acquiring a seismic survey proximate to the region of the subsurface of the earth.

5. The method of Claim 1, wherein a time duration of the firing pattern is between one second and ten seconds.

6. The method of Claim 1, wherein step (g) is performed by solving:

$$d = Am.$$

where *m* is said plurality of seismic traces obtained by reconstruction, d is said recorded seismic data, and *A*, is a set of Popcorn signatures corresponding to said firing schedule.

7. The method of Claim 1, wherein step (g) is performed by solving:

$$d = ACm.$$

where *m* is said plurality of seismic traces obtained by reconstruction, d is said recorded seismic data, *A*, is a set of Popcorn signatures corresponding to said firing schedule, and *C* is a matrix of coherency conditions.

8. The method of Claim 1 wherein plurality of firing intervals are either monotonically increasing in length or monotonically decreasing in length.

9. The method of Claim 1 wherein step (a) comprises the steps of:

> (al) generating (415) a plurality of candidate analytic firing patterns;
> (a2) determining (416) a maximum amplitude of each of said plurality of candidate analytic firing patterns when they are applied to said set (330) of sources (340, 350);
> (a3) determining (416) which one of said candidate analytic firing patterns has a smallest maximum amplitude;
> (a4) selecting (417) as said analytic firing pattern said determined one of said candidate analytic firing patterns which has said smallest maximum amplitude.

10. The method according to Claim 1 where said firing intervals are piecewise monotonic.

**Patentansprüche**

1. Verfahren zur seismischen Exploration von Kohlenwasserstoffen in einer Region des Erduntergrunds (324), wobei ein Satz (330) von seismischen Quellen (340, 350) bereitgestellt wird, wobei der genannte Satz (330) von seismischen Quellen (340, 350) mehrere Subarrays umfasst, wobei jedes der genannten Subarrays eine oder mehrere damit assoziierte seismische Quellen (340, 350) aufweist, wobei das Verfahren Folgendes beinhaltet:

> (a) Auswählen (410) eines Zündmusters;
> (b) Zuweisen (415) einer unterschiedlichen Zündzeit innerhalb des genannten Zündmusters zu jedem der genannten mehreren Subarrays, um dadurch einen Zündplan mit einer entsprechenden Mehrzahl von Zündintervallen zwischen sukzessiven damit assoziierten Schüssen zu bilden;
> (c) Positionieren (420) des genannten Satzes von seismischen Quellen (340, 350) an einem ersten Ort in der Nähe der Region des Erduntergrunds (324);
> (d) Aktivieren (420) jedes der genannten Subarrays gemäß dem genannten Zündplan;
> (e) Aufzeichnen (425) seismischer Daten, wenn jedes der genannten mehreren Subarrays aktiviert wird;
> (f) Durchführen der Schritte (d) und (e) an mehreren verschiedenen Orten in der Nähe der Region des Erduntergrunds (324), wodurch seismische Popcorn-Messungen erzielt werden;
> (g) Rekonstruieren (430) der genannten aufgezeichneten seismischen Daten aus der genannten seismischen Popcorn-Messung, um dadurch mehrere seismische Spuren zu erhalten; und
> (h) Verwenden (435) der genannten mehreren seismischen Spuren, um mindestens einen Teil des Erduntergrunds (324) abzubilden;
> wobei das Verfahren **dadurch gekennzeichnet ist, dass**
> das Zündmuster analytisch ist, wobei die mehreren Zündintervalle zwischen sukzessiven Quellen monoton in der Länge variieren; und das genannte analytische Zündmuster auf einer Anzahl von seismischen Quellen in dem Satz von seismischen Quellen und einer Größe der seismischen Quellen in dem Satz von seismischen Quellen basiert.

2. Verfahren nach Anspruch 1, wobei mindestens eines der genannten Subarrays eine einzelne aus dem genannten Satz (330) von seismischen Quellen (340, 350) umfasst.

3. Verfahren nach Anspruch 1, wobei mindestens die Schritte (c) bis (g) mehrmals an mehreren verschiedenen Orten in der Nähe der Region des Erduntergrunds (324) durchgeführt werden, um dadurch eine seismische Messung in der Nähe der Region des Erduntergrunds (324) zu erzielen.

4. Verfahren nach Anspruch 1, wobei mindestens die Schritte (a) bis (g) mehrmals an mehreren verschiedenen Orten in der Nähe der Region der Erduntergrunds durchgeführt werden, um dadurch eine seismische Messung in der Nähe der Regions des Erduntergrunds zu erzielen.

5. Verfahren nach Anspruch 1, wobei eine Zeitdauer des Zündmusters zwischen einer Sekunde und zehn Sekunden liegt.

**6.** Verfahren nach Anspruch 1, wobei Schritt (g) durchgeführt wird durch Lösen von:

$$d = Am.$$

wobei $m$ die genannte Mehrzahl von durch Rekonstruktion erhaltenen seismischen Spuren ist, d die genannten aufgezeichneten seismischen Daten sind und A ein Satz von Popcorn-Signaturen entsprechend dem genannten Zündplan ist.

**7.** Verfahren nach Anspruch 1, wobei Schritt (g) durchgeführt wird durch Lösen von:

$$d = ACm.$$

wobei $m$ die genannte Mehrzahl von durch Rekonstruktion erhaltenen seismischen Spuren ist, $d$ die genannten aufgezeichneten seismischen Daten sind, $A$ ein Satz von Popcorn-Signaturen entsprechend dem genannten Zündplan ist und $C$ eine Matrix von Kohärenzbedingungen ist.

**8.** Verfahren nach Anspruch 1, wobei mehrere Zündintervalle entweder monoton an Länge zunehmen oder monoton an Länge abnehmen.

**9.** Verfahren nach Anspruch 1, wobei Schritt (a) die folgenden Schritte beinhaltet:

(a1) Erzeugen (415) mehrerer analytischer Zündmusterkandidaten;
(a2) Bestimmen (416) einer maximalen Amplitude jedes der genannten mehreren analytischen Zündmusterkandidaten, wenn sie auf den genannten Satz (330) von Quellen (340, 350) angewendet werden;
(a3) Bestimmen (416), welches der genannten analytischen Zündmusterkandidaten die kleinste maximale Amplitude aufweist;
(a4) Auswählen (417) des genannten bestimmten der genannten analytischen Zündmusterkandidaten, der die genannten kleinste maximale Amplitude hat, als das genannte analytische Zündmuster.

**10.** Verfahren nach Anspruch 1, wobei die genannten Zündintervalle stückweise monoton sind.

**Revendications**

**1.** Procédé d'exploration sismique pour des hydrocarbures au sein d'une région de la subsurface (324) de la terre, dans lequel est fourni un ensemble (330) de sources sismiques (340, 350), ledit ensemble (330) de sources sismiques (340, 350) comprenant une pluralité de sous-réseaux, chacun desdits sous-réseaux ayant une ou plusieurs sources sismiques (340, 350) associées à celui-ci, le procédé comprenant :

(a) la sélection (410) d'un schéma de tir ;
(b) l'attribution (415) à chacun de ladite pluralité de sous-réseaux d'un temps de tir différent dans ledit schéma de tir, formant ainsi un plan de tir ayant une pluralité correspondante d'intervalles de tir entre des tirs successifs associés à celui-ci ;
(c) le positionnement (420) dudit ensemble de sources sismiques (340, 350) au niveau d'un premier emplacement à proximité de la région de la subsurface (324) de la terre ;
(d) l'activation (420) de chacun desdits sous-réseaux selon ledit plan de tir ;
(e) l'enregistrement (425) de données sismiques alors que chacun de ladite pluralité de sous-réseaux est activé ;
(f) la réalisation des étapes (d) et (e) au niveau d'une pluralité d'emplacements différents à proximité de la région de la subsurface (324) de la terre, acquérant ainsi une étude sismique de type popcorn ;
(g) la reconstruction (430) desdites données sismiques enregistrées de ladite étude sismique de type popcorn, obtenant ainsi une pluralité de traces sismiques ; et,
(h) l'utilisation (435) de ladite pluralité de traces sismiques pour produire une image d'au moins une partie de la subsurface (324) de la terre ;
le procédé étant **caractérisé en ce que**
le schéma de tir est analytique, dans lequel la pluralité d'intervalles de tir entre des sources successives varient de manière monotone en longueur ; et ledit schéma de tir analytique est basé sur un nombre de sources sismiques dans l'ensemble de sources sismiques, et une taille des sources sismiques dans l'ensemble de sources sismiques.

**2.** Procédé selon la revendication 1, dans lequel au moins l'un desdits sous-réseaux comprend une seule dudit ensemble (330) de sources sismiques (340, 350).

**3.** Procédé selon la revendication 1, dans lequel au moins les étapes (c) à (g) sont réalisées une pluralité de fois au niveau d'une pluralité d'emplacements différents à proximité de la région de la subsurface (324) de la terre, acquérant ainsi une étude sismique à proximité de la région de la subsurface (324) de la terre.

**4.** Procédé selon la revendication 1, dans lequel au moins les étapes (a) à (g) sont réalisées une pluralité de fois au niveau d'une pluralité d'emplacements différents à proximité de la région de la subsurface de la terre, acquérant ainsi une étude sismique à proximité de la région de la subsurface de la terre.

5. Procédé selon la revendication 1, dans lequel une durée de temps du schéma de tir est entre une seconde et dix secondes.

6. Procédé selon la revendication 1, dans lequel l'étape (g) est réalisée en résolvant :

$$d=Am.$$

où $m$ représente ladite pluralité de traces sismiques obtenues par reconstruction, d représente lesdites données sismiques enregistrées, et $A,$ est un ensemble de signatures de type popcorn correspondant audit plan de tir.

7. Procédé selon la revendication 1, dans lequel l'étape (g) est réalisée en résolvant:

$$d=ACm.$$

où $m$ représente ladite pluralité de traces sismiques obtenues par reconstruction, $d$ représente lesdites données sismiques enregistrées, $A,$ est un ensemble de signatures de type popcorn correspondant audit plan de tir, et C est une matrice de conditions de cohérence.

8. Procédé selon la revendication 1 dans lequel la pluralité d'intervalles de tir soit augmentent de manière monotone en longueur soit diminuent de manière monotone en longueur.

9. Procédé selon la revendication 1 dans lequel l'étape (a) comprend les étapes suivantes :

(a1) la génération (415) d'une pluralité de schémas de tir analytiques candidats ;
(a2) la détermination (416) d'une amplitude maximale de chacun de ladite pluralité de schémas de tir analytiques candidats quand ils sont appliqués audit ensemble (330) de sources (340, 350) ;
(a3) la détermination (416) du schéma desdits schémas de tir analytiques candidats qui a une amplitude maximale la plus petite ;
(a4) la sélection (417) comme ledit schéma de tir analytique, dudit schéma desdits schémas de tir analytiques candidats déterminé qui a ladite plus petite amplitude maximale.

10. Procédé selon la revendication 1 où lesdits intervalles de tir sont monotones par morceaux.

*Figure 1*

DESIGN MARINE SEISMIC SURVEY TO IMAGE SUBSURFACE TARGET — 110

CONDUCT SURVEY — 120
• POSITION SOURCE ARRAY BEHIND BOAT
• MOVE ARRAY TO FIRST ACTIVATION POINT
• SUCCESSIVELY ACTIVATE AND RECORD EACH SOURCE IN ARRAY WHILE VESSEL IS MOVING

130 — INITIAL PROCESSING: PRODUCE GEOPHYSICAL DATA WITH X/Y/ COORDINATES

140 —
• ALGORITHMS FOR INVERTING SHOT DATA
• ALGORITHSM FOR PROCESSING / IMAGING DATA

150

170 — COMPUTER DISPLAY OF GEOPHYSICAL DATA AND/OR ATTRIBUTES

WORKSTATION

PROCESSING COMPUTER(S) OR WORKSTATIONS

MAP OR PLOT OF SEISMIC DATA AND/OR ATTRIBUTES
180

# *Figure 2*

**210**
SEISMIC DATA COLLECTION
ACQUIRE SPATIALLY RELATED UNSTACKED
SEISMIC DATA OVER EXPLORATION TARGET

**215**
EDIT
- DEMULTIPLEX
- WAVLET SHAPING
- VIBROSEIS CORRELATION
- VERTICAL SUM, RESAMPLE, ETC.

**220**
INITIAL PROCESSING
- SPECIFY SURVEY GEOMETRY
- APPLY INITIAL DECONVOLUTION
- DETERMINE/APPLY FIELD STATICS
- ANALYZE AMPLITUDES
- ANALYZE VELOCITIES
- APPLY NORMAL MOVEOUT (NMO)
- SORT (E.G., INTO CMP ORDER)

**230**
SIGNAL PROCESSING/
CONDITIONING/ IMAGING
- DETERMINE/APPLY RESIDUAL STATICS
- REMOVE MULTIPLES
- APPLY DECONVOLUTION (OPTIONAL)
- FREQUENCY FILTERING
- PRESTACK IMAGING
- MUTE AND STACK
- APPLY ADDITIONAL GAIN CORRECTIONS
- POST STACK IMAGING

**240**
TIME OR DEPT
Y
X
IMAGED SECTIONS OR VOLUMES

**250**
INITIAL SEISMIC INTERPRETATION
- PICK MAJOR REFLECTORS,
  FAULTS, ETC.
- IDENTIFY SURFACE LAND-
  MARKS (WELLS, ETC.)

**260**
DATA / IMAGE ENHANCEMENT

**270**
ATTRIBUTE GENERATION

**280**
SEISMIC DATA RE-
INTERPRETATION

**290**
PROSPECT GENERATION

**Figure 3**

**Figure 5**
**(Prior art)**

**Figure 6**

*Figure 4*

ACQUISITION

DESIGN SURVEY — 405

CHOOSE SOURCES AND ARRAY / SUBARRAY CONFIGURATION — 410

SELECT ARRAY / SUBARRAY PARAMETERS AND CRITERIA — 415

OPTIMIZE DESIGN PER SELECTED PARAMETERS — 416

MOVE TO SURVEY AREA AND ACTIVATE SUBARRAYS PER SCHEDULES — 420

CONTINUOUSLY RECORD SUBARRAY ACTIVATIONS — 425

SEPARATE ACTIVATIONS — 430

COMBINE DATA FROM SUBARRAYS TO IMPROVE SIGNAL QUALITY — 432

PROCESS TRACES TO PRODUCE SUBSURFACE IMAGES — 435

INTERPRET PROCESSED SEISMIC DATA — 440

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012078978 A
- US 542433
- US 8295124 B2
- US 851590
- US 8559270 B2
- US 315925